# EUROPÄISCHE PATENTANMELDUNG

(11) **EP 1 775 525 A1**
(43) Veröffentlichungstag der Anmeldung: **18.04.2007**
(21) Anmeldenummer: 05450166.3
(22) Anmeldetag: 11.10.2005
(51) Int. Cl.: F24J 2/46

(54) **Verfahren zur Montage eines Sonnenkollektors**

(71) Anmelder: Green One Tec Solar-Industrie GmbH, 9300 St. Veit (AT)
(72) Erfinder: Kanduth, Robert, 9020 Klagenfurt (AT)
(74) Vertreter: Babeluk, Michael

(57) **Zusammenfassung**

Die vorliegende Erfindung betrifft ein Verfahren zur Montage des Gehäuses (1) eines Sonnenkollektors, bestehend aus seitlichen Rahmenelementen (2), einer Rückwand (3) und einer Abdeckplatte (4) aus Solarglas oder aus einer Bodenwanne und einer Abdeckplatte (4) aus Solarglas, wobei die einzelnen Gehäuseteile (2,3,4) mit einem Klebestoff (9,12) verbunden werden welcher ausreichende Hantierungsfestigkeit innerhalb von zwei Stunden, bevorzugt innerhalb von einer Stunde und insbesondere bevorzugt innerhalb von weniger als 45 Minuten erreicht.

## Beschreibung

Die Erfindung betrifft ein Verfahren zur Montage des Gehäuses eines Sonnenkollektors und ein nach diesem Verfahren hergestelltes Kollektorgehäuse, sowie einen speziell für diesen Anwendungsfall eingesetzten Klebstoff.

Das Gehäuse eines Sonnenkollektors besteht entweder aus vier Rahmenteilen, welche mit einer Rückwand verbunden sind und einer Glasabdeckung oder aus einer tiefgezogenen Bodenwanne und einer Glasabdeckung.

Um die einzelnen Bauteile dichtend miteinander zu verbinden, werden die Rahmenteile bisher im Stoßbereich miteinander verschweißt oder vernietet und die Verbindungsstellen zusätzlich mit Silikondichtmasse abgedichtet. Die Rückwand wird meist mit dem Rahmen verpresst oder vernietet und mit Silikondichtmasse abgedichtet.

Zur dichtenden Befestigung der Glasabdeckung werden üblicherweise Verklemmungen, Verschnappungen oder Verschraubungen mit speziellen Gummidichtungen verwendet. Alternativ setzt man auch doppelseitige Silikonklebstreifen in Verbindung mit Silikondichtmasse ein.

Alle diese Verfahren zur Herstellung eines Kollektorgehäuses zeichnen sich jedoch dadurch aus, dass deren Montage aus vielen einzelnen Arbeitsschritten besteht und ihre automatisierte Fertigung daher sehr aufwendig und teuer ist.

Ziel der vorliegenden Erfindung ist es daher, ein Verfahren zur Montage des Gehäuses eines Sonnenkollektors zu schaffen, welches aus erheblich weniger Arbeitsschritten besteht und zudem relativ einfach automatisierbar ist. Zudem sollte die Anzahl der Einzelteile - insbesondere zur Montage der Glasabdeckung - reduziert werden, indem man Verbindungs- und Dichtfunktion kombiniert.

Zur Lösung dieser Aufgabe wurde versucht, auf im Kollektorbau seit langem bekannte Silikondichtmassen als ausschließliches Verbindungselement zurückzugreifen, welche jedoch den erheblichen Nachteil haben, dass sie bis zur Erzielung einer ausreichenden Festigkeit lange Aushärtezeiten von 24 Stunden und mehr benötigen. In dieser Zeit müssen die Kollektorgehäuse in fixierter Position zwischengelagert werden, um eine Verschiebung der Einzelteile und damit verbunden eine Schädigung der Klebenaht zu vermeiden. Um diesen Nachteil zu umgehen, wird ein speziell für diesen Anwendungsfall konzipierter Klebstoff eingesetzt, welcher sich durch eine erheblich geringere Aushärtezeit auszeichnet.

Die gestellte Aufgabe wird letztendlich dadurch gelöst, dass die einzelnen Bauteile mit dem speziell hierfür konzipierten Klebstoff miteinander verklebt werden, wobei gleichzeitig eine gute Abdichtung des Gehäuses erzielt wird. Vorteilhafte Weiterentwicklungen sind Gegenstand der abhängigen Ansprüche.

Prinzipiell können nach dem erfindungsgemäßen Verfahren sowohl Kollektorgehäuse mit einer Bodenwanne als auch solche, die seitliche Rahmenteile und eine damit verbundene Rückwand aufweisen, hergestellt werden. Da die Gehäuse mit Bodenwanne jedoch nicht so anschaulich sind, wird in den Figuren nur auf die Kollektorgehäuse mit Rahmenteilen und Rückwand eingegangen. Es versteht sich jedoch von selbst, dass auch Kollektorgehäuse mit Bodenwanne mit einer entsprechenden Profilierung im Auflagebereich der Glasabdeckung unter die vorliegende Erfindung fallen.

Die Erfindung wird nachfolgend anhand der Figuren näher erläutert. Darin zeigt:
- Fig. 1: einen Schnitt durch einen Sonnenkollektor;
- Fig. 2: den Auflagebereich der Glasabdeckung als vergrößerter Ausschnitt;
- Fig. 3: einen Eckbereich des Gehäuses;

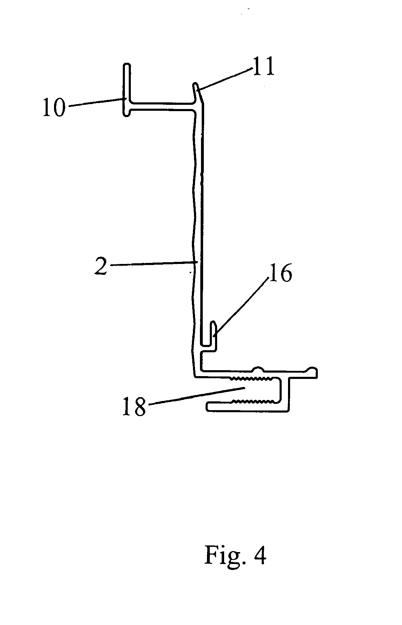

- Fig. 4: das Rahmenprofil aus Fig. 1 separiert und vergrößert;

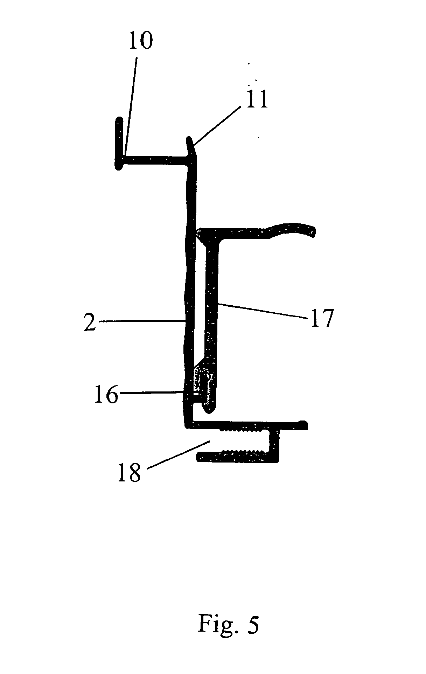

- Fig. 5: das Rahmenprofil aus Fig. 4 mit einer zusätzlichen Halterung für den Absorber;
- Fig. 6: die Schrägansicht der Flanschplatte aus Fig. 1, Fig. 2 und Fig. 3;
- Fig. 7: die Flanschplatte aus Fig. 6 im horizontalen Querschnitt;
- Fig. 8: eine Variante der Flanschplatte nach Fig. 6 in Schrägansicht.

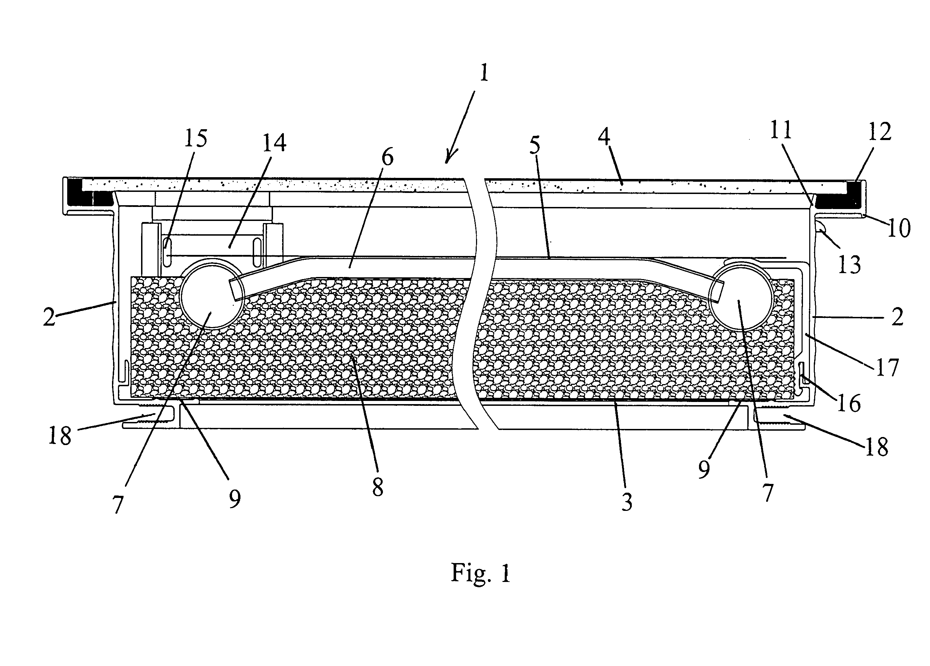

Der hier gezeigte Sonnenkollektor 1 besteht, wie aus Fig. 1 hervorgeht, aus Rahmenteilen 2, einer Rückwand 3, einem Abdeckglas 4, dem Absorber 5 mit Registerrohren 6 und Sammelrohren 7 und der Isolierung 8. Die Rückwand 3 ist mit den Rahmenteilen 2 durch die Klebstoffnaht 9 verbunden. Ein am Rahmenteil 2 angeformtes L-Profil 10 bildet gemeinsam mit dem angeformten Steg 11 einen wannenförmigen, umlaufenden Kanal für die Aufnahme der Klebstoffnaht 12.

Er zeichnet sich dadurch aus, dass die einzelnen Gehäuseteile lediglich durch den verwendeten Klebstoff zusammengehalten werden. Bisher übliche Klemmleisten, Schweißnähte oder Vernietung und anschließende Abdichtung mit Silikondichtmasse entfallen zur Gänze. Indem die Verklebung gleichzeitig auch die Abdichtung bildet, reduziert sich die Zahl der Montageschritte erheblich.

Zusätzlich können in den Rahmenteilen 2 eingepresste Belüftungskerben 13 enthalten sein. Weiters kann eine Flanschplatte 14 zur Durchführung des Sammelrohres 7 mit Entlüftungsöffnungen 15 vorgesehen sein. Es ist auch möglich, auf einem angeformten Steg 16 des Rahmenteiles 2 eine zusätzliche Halterung 17 für den Absorber vorzusehen. Weiters kann am Rahmenteil 2 ein Schraubkanal 18 angeformt sein.

Gut erkennbar ist hier die Klebenaht 12, welche die Abdeckplatte 4 aus Solarglas mit dem Rahmen 2 verbindet. In derselben Ausführungsart kann die Abdeckplatte 4 aus Solarglas mit der Auflagefläche einer Bodenwanne verbunden sein. Die Abdeckplatte 4 stützt sich dabei auf dem Steg 11 ab und führt dabei zu einer teilweisen Verdrängung des Klebstoffes, welcher zuvor wulstförmig in den durch das L-Profil 10 und den Steg 11 gebildeten wannenförmigen Kanal eingebracht wurde. Der eingebrachte Klebstoff wird dabei so dosiert, dass die verdrängte Menge gerade ausreicht, um den Raum zwischen der äußeren Kante der Abdeckplatte 4 und der inneren Kante des L-Profiles 10 nahezu vollständig auszufüllen, wodurch eine quasi ebene Oberfläche entsteht.

Da der Kollektor großen Temperaturschwankungen ausgesetzt ist, muss auf die unterschiedlichen Dehnungskoeffizienten von Solarglas und Kollektorgehäuse Bedacht genommen werden. Die Dichtheit der Klebenähte, insbesondere der Klebenaht 12 darf dabei trotz der unterschiedlichen Dehnungskoeffizienten und der übrigen Umwelteinflüsse auch über eine jahrelange Standzeit nicht verloren gehen. In Versuchen wurde festgestellt, dass die hierfür geeignete Fugenbreite bei Verwendung eines Zweikomponenten-Silikonklebstoffes zwischen der äußeren Kante der Abdeckplatte 4 und der inneren Kante des Steges 10 zwischen 4 mm und 12 mm betragen sollte, wobei die bevorzugte Fugenbreite zwischen 6 mm und 7 mm liegt.

Ebenfalls durch Versuche wurde ermittelt, dass der optimale Bereich für die Überlappung von Abdeckplatte 4 und Rahmen 2 zwischen 5 mm und 12 mm beträgt, wobei eine bevorzugte Überlappung zwischen 7 mm und 8 mm liegt.

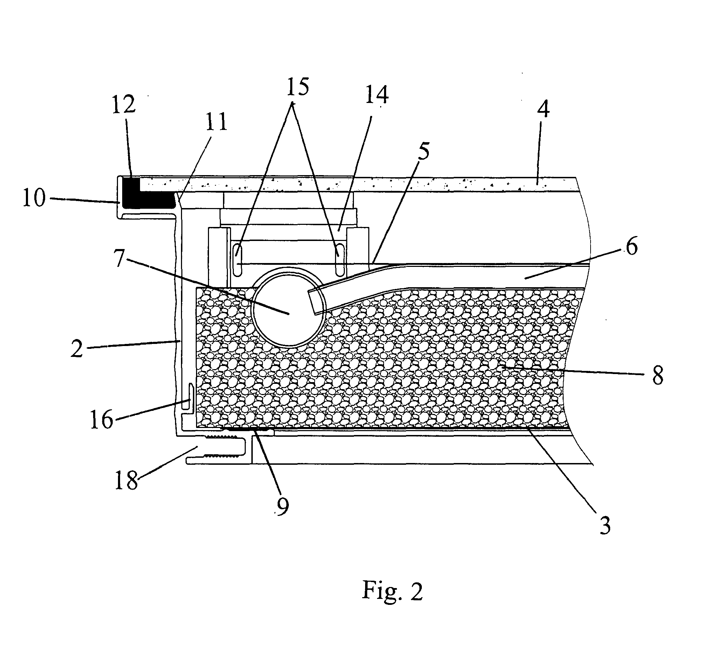

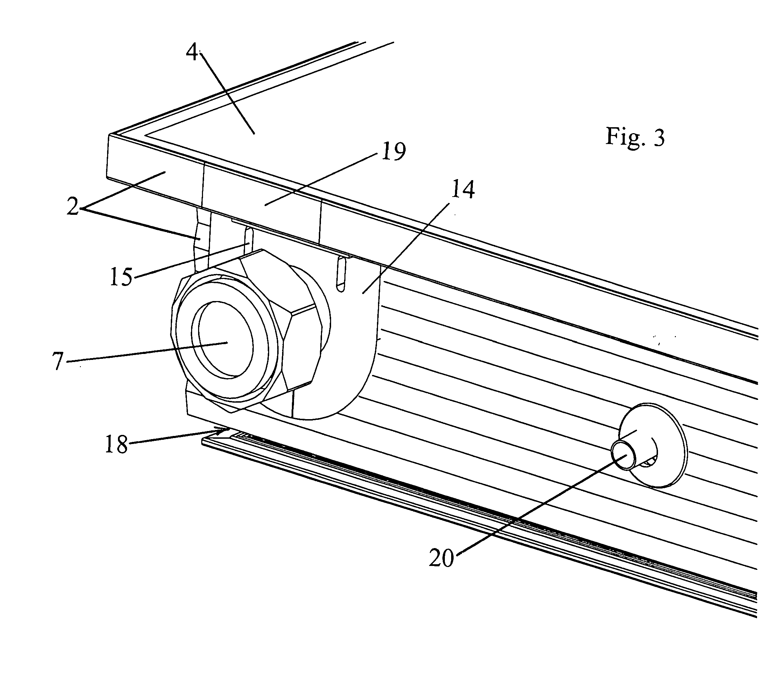

Kollektoren, die nicht unter die Kategorie von Vakuumkollektoren fallen, benötigen für den Gasdruckausgleich Belüftungsöffnungen an geschützten Stellen, an denen kein Niederschlagswasser eindringen kann. Zu diesem Zweck hat es sich als vorteilhaft erwiesen, unmittelbar unterhalb des L-Profiles 10 in den Rahmen 2 durch Stanzen mit teilweiser Materialtrennung Belüftungskerben 13 anzubringen. Solche Belüftungsöffnungen können aber auch als Durchbrüche 15 in einer Flanschplatte 14 vorgesehen sein, wie diese insbesondere aus den Figuren 2 und 3 hervorgeht. Solche Flanschplatten dienen zur dichtenden Durchführung eines Sammelrohres 7. Oberhalb der Flanschplatte 14 ist der Rahmenteil 2 von einem Brückenteil 19 abgeschlossen. Weiters können zusätzliche Einrichtungen vorgesehen sein, wie etwa seitlich im Rahmenteil 2 eine oder mehrere Hülsen 20 zur Durchführung eines Temperaturfühlers.

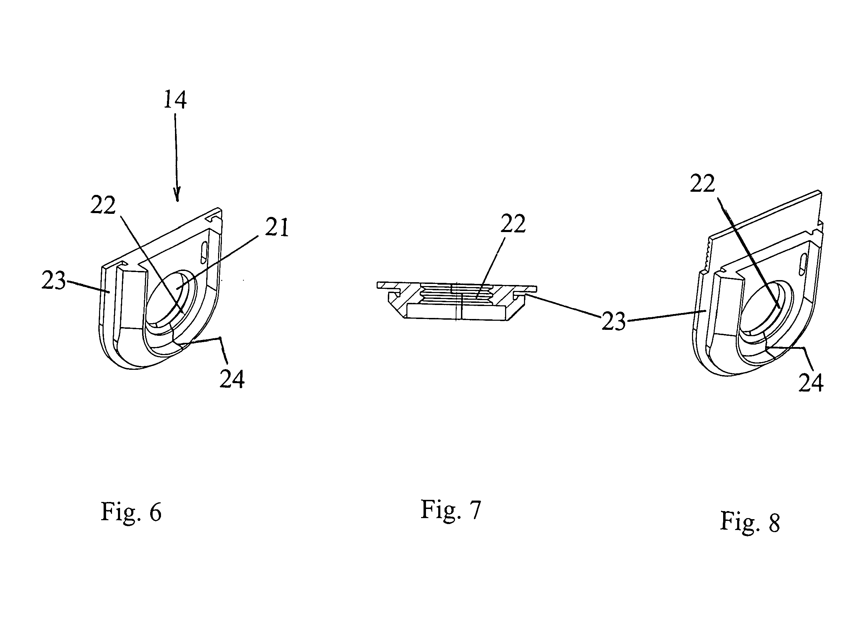

Die speziell für diesen Kollektortyp entwickelte Flanschplatte 14 besteht aus dauerelastischem Kunststoff. Sie zeichnet sich dadurch aus, dass sie entgegen herkömmlichen Flanschplatten einteilig ausgeführt ist und eine radial um die Durchführungsöffnung 21 für das Sammelrohr 7 angeformte Dichtlippe 22 besitzt, welche bevorzugt als Doppeldichtlippe ausgeführt ist. Diese Flanschplatte 14 wird in eine entsprechende Ausnehmung im Rahmenteil 2 eingeschoben, wobei in die Nut 23 der erfindungsgemäße Klebstoff eingefügt werden kann und eignet sich auch zur Durchführung eines Sammelrohres 7 mit Gewindeschnitt für eine Holländerverbindung. Die Dichtlippen 22 sind dabei konisch zulaufend ausgebildet. Besonders vorteilhaft hat sich erwiesen, den Schnitt 24 mit einer innenliegenden seitlichen Versetzung auszuführen. Für den Einsatz bei einer Bodenwanne wird vorteilhaft eine Variante mit zusätzlicher Abdichtlasche 25 eingesetzt, wie sie aus Fig. 8 hervorgeht.

Als besonders vorteilhaft hat es sich heraus gestellt, wenn in solchen nur durch Klebstoff zusammen gehaltenen Kollektoren auf einem angeformten Steg 16 des Rahmenteiles 2 eine zusätzliche Halterung 17 für den Absorber aufgesteckt ist. Weiters von Vorteil ist es bei der erfindungsgemäßen Kollektorart, am Rahmenteil 2 einen Schraubkanal 18 anzuformen.

Neben diesen rein konstruktiven Merkmalen kommt jedoch dem verwendeten Klebstoff zur Montage des Gehäuses 1 des Sonnenkollektors eine ganz besondere Bedeutung zu. Erst durch ihn wird es möglich, die gestellten Aufgaben umfassend lösen zu können. Herkömmliche Silikondichtmassen, wie sie im Kollektorbau bereits bekannt sind, sind für den Einsatz beim erfindungsgemäßen Verfahren ungeeignet, da sie nach dem Aushärten entweder nicht die erforderlichen Festigkeitswerte aufweisen, oder zu lange Aushärtezeiten haben.

So müssen Kollektorgehäuse, welche mit solchen bekannten Silikonklebstoffen gefertigt werden zwischen 24 und 48 Stunden zwischengelagert werden je nach verwendetem Produkt, bevor der Kollektor zur weiteren Bearbeitung wieder problemlos hantiert werden kann. Werden diese doch sehr langen Aushärtezeiten nicht eingehalten, so kommt es durch die Verschiebung der Glasabdeckung stellenweise zur Beschädigung der Klebenaht, wodurch das Gehäuse in diesem Bereich mangelhafte Dichtheit aufweist.

Diese Qualitätsminderung ist auf den ersten Blick oft nicht sofort erkennbar und macht sich erst im Betrieb durch Undichtheit oder mechanisches Versagen der Verbindung durch Witterungs- oder sonstige Einflüsse bemerkbar. Eindringende Feuchtigkeit führt zu einer Durchfeuchtung der Isolierung was sich durch einen beträchtlichen Leistungsverlust bemerkbar macht.

Der erfindungsgemäß verwendete Klebstoff zeichnet sich durch folgende Eigenschaften aus:
- im ausgehärteten Zustand hält er einer Windgeschwindigkeit bis 150 km/h und/oder einer Schneelast bis 4 kN/m³ stand;
- seine Hantierungsfestigkeit ist innerhalb von 2 Stunden, bevorzugt innerhalb von einer Stunde und insbesondere bevorzugt innerhalb von weniger als 45 Minuten erreicht;
- er ist bis 120°C temperaturbeständig;
- er besitzt ausreichende Zähigkeit zur Kompensation der unterschiedlichen Längenausdehnungen von Glas und Aluminium auf eine Länge von mindestens 2,5 Meter;
- er ist ausgasungsfrei;
- er ist über einen Zeitraum von mindestens 20 Jahre UV-beständig.

Durch das erfindungsgemäße Verfahren wird es erstmals möglich, mit sehr wenigen Arbeitsschritten den Zusammenbau und die Abdichtung eines Kollektorgehäuses mit hoher Langzeitqualität herzustellen. Darüber hinaus kann die Aufbereitung und Aufbringung des Klebstoffes in einfacher Weise automatisiert erfolgen. Durch die erheblich reduzierte Aushärtezeit kann der Fertigungsprozess in sehr wirtschaftlicher Weise mit einem hohen Automatisierungsgrad durchgeführt werden. Es sind weniger Einzelteile erforderlich, die Montage verläuft wesentlich einfacher in weniger Herstellungsschritten. Insgesamt sind kürzere Montagestraßen möglich, wodurch die Herstellungskosten bei hoher Qualitätszuverlässigkeit erheblich reduziert werden können.

## Patentansprüche

1. Verfahren zur Montage des Gehäuses (1) eines Sonnenkollektors, bestehend aus seitlichen Rahmenelementen (2), einer Rückwand (3) und einer Abdeckplatte (4) aus Solarglas oder aus einer Bodenwanne und einer Abdeckplatte (4) aus Solarglas, **dadurch gekennzeichnet, dass** die einzelnen Gehäuseteile mit einem Klebstoff verbunden werden, welcher im ausgehärteten Zustand einer Windgeschwindigkeit von mindestens 150 km/h und/oder einer Schneelast bis 4 kN/m³ standhält, seine Hantierungsfestigkeit innerhalb von 2 Stunden, bevorzugt innerhalb von einer Stunde und insbesondere bevorzugt innerhalb von weniger als 45 Minuten erreicht, bis mindestens 120°C temperaturbeständig ist, ausreichende Zähigkeit zur Kompensation der unterschiedlichen Längenausdehnungen von Glas und Aluminium auf eine Länge von mindestens 2,5 Meter besitzt, ausgasungsfrei ist und über einen Zeitraum von mindestens 20 Jahre UV-beständig ist und die Halte- und Dichtfunktion über diesen Zeitraum unverändert beibehält.

2. Verfahren nach Anspruch 1 oder 2, **dadurch gekennzeichnet, dass** die einzelnen Gehäuseteile ausschließlich mit diesem Klebstoff verbunden werden.

3. Verfahren nach Anspruch 1, **dadurch gekennzeichnet, dass** der Klebstoff ein Silikonklebstoff, insbesondere ein Zweikomponenten - Silikonklebstoff ist, wobei die Vulkanisation bei Raumtemperatur und der vorherrschenden Luftfeuchtigkeit erfolgt.

4. Sonnenkollektor, hergestellt nach einem Verfahren nach einem der Ansprüche 1, 2 oder 3, bestehend aus einem Kollektorgehäuse (1) aus seitlichen Rahmenteilen (2), einer Rückwand (3) und einer Abdeckplatte (4) aus Solarglas oder aus einer Bodenwanne und einer Abdeckplatte (4) aus Solarglas, in welchem sich der Absorber bestehend aus Absorberblech (5), Registerrohren (6) und Sammelrohren (7), sowie eine Isolierung (8) und gegebenenfalls weitere Zusatzeinrichtungen befinden, **dadurch gekennzeichnet, dass** die Abdeckplatte (4) mit der Bodenwanne oder mit den Rahmenteilen (2) durch die Klebenaht (12) verbunden ist und gegebenenfalls die Rückwand (3) mit den Rahmenteilen (2) durch die Klebenaht (9) verbunden ist.

5. Sonnenkollektor nach Anspruch 4, **dadurch gekennzeichnet, dass** ein am Rahmenteil (2) oder an der Bodenwanne angeformtes L-Profil (10) gemeinsam mit dem angeformten Steg (11) einen wannenförmigen, umlaufenden Kanal für die Aufnahme der Klebenaht (12) bildet.

6. Sonnenkollektor nach Anspruch 4 oder 5, **dadurch gekennzeichnet, dass** die Überlappung von Abdeckplatte (4) und Rahmen (2) bei Verwendung von Silikonklebstoffen zwischen 5 mm und 12 mm, bevorzugt zwischen 7 mm und 8 mm beträgt.

7. Sonnenkollektor nach einem der Ansprüche 4 bis 6, **dadurch gekennzeichnet, dass** in einem oder mehreren Rahmenteilen (2) mindestens eine Belüftungskerbe (13) eingepresst ist.

8. Sonnenkollektor nach einem der Ansprüche 4 bis 7, **dadurch gekennzeichnet, dass** in mindestens einem Seitenteil (2) eine Flanschplatte (14) zur dichtenden Durchführung eines Sammelrohres (7) vorgesehen ist, welche bevorzugt mindestens eine Belüftungsöffnung (15) aufweist.

9. Sonnenkollektor nach einem der Ansprüche 4 bis 8, **dadurch gekennzeichnet, dass** die Flanschplatte (14) aus dauerelastischem Material gefertigt und einteilig ausgeführt ist, eine radial um die Durchführungsöffnung (21) für das Sammelrohr (7) angeformte Dichtlippe (22), welche bevorzugt als Doppeldichtlippe ausgeführt ist, eine Nut (23) und einen Schlitz (24) besitzt und in die Seitenwand (2) oder in die Bodenwanne eingefügt wird und wobei die Dichtlippen (22) konisch zulaufend ausgebildet sind, wobei in die Nut (23) gegebenenfalls Klebstoff unmittelbar vor ihrer Montage eingebracht wird.

10. Sonnenkollektor nach einem der Ansprüche 4 bis 9, **dadurch gekennzeichnet, dass** der Schnitt (24) mit einer innenliegenden seitlichen Versetzung ausgeführt ist.

11. Sonnenkollektor nach einem der Ansprüche 4 bis 10, **dadurch gekennzeichnet, dass** für den Einsatz bei einer Bodenwanne an die Flanschplatte (14) zusätzlich eine Abdichtlasche (25) angeformt ist.

12. Sonnenkollektor nach einem der Ansprüche 4 bis 11, **dadurch gekennzeichnet, dass** auf einem angeformten Steg (16) des Rahmenteiles (2) eine zusätzliche Halterung (17) für den Absorber aufgesteckt ist.

13. Sonnenkollektor nach einem der Ansprüche 4 bis 12, **dadurch gekennzeichnet, dass** am Rahmenteil (2) ein Schraubkanal (18) angeformt ist.

14. Sonnenkollektor nach einem der Ansprüche 4 bis 13, **dadurch gekennzeichnet, dass** der Rahmenteil (2) oberhalb der Flanschplatte (14) von einem Brückenteil (19) abgeschlossen ist und seitlich im Rahmenteil (2) mindestens eine Hülse (20) zur Durchführung eines Temperaturfühlers vorgesehen ist.

15. Klebstoff zur Verwendung in einem Verfahren nach einem der Ansprüche 1 bis 3 zur Montage des Gehäuses (1) eines Sonnenkollektors nach einem der Ansprüche 3 bis 14, **dadurch gekennzeichnet, dass** er im ausgehärteten Zustand einer Windgeschwindigkeit von mindestens 150 km/h und/oder einer Schneelast bis 4 kN/m³ standhält, seine Hantierungsfestigkeit innerhalb von zwei Stunden, bevorzugt innerhalb von einer Stunde und insbesondere bevorzugt innerhalb von weniger als 45 Minuten erreicht, bis mindestens 120°C temperaturbeständig ist, ausreichende Zähigkeit zur Kompensation der unterschiedlichen Längenausdehnungen von Glas und Aluminium auf eine Länge von mindestens 2,5 Meter besitzt, ausgasungsfrei ist und über einen Zeitraum von mindestens 20 Jahre UV-beständig ist, sowie unveränderte Halte- und Dichtfunktion über diesen Zeitraum besitzt.

16. Klebstoff nach Anspruch 15, bestehend aus zwei Komponenten, welche unmittelbar vor dem Einsatz des Klebstoffes gemischt werden, **dadurch gekennzeichnet, dass** er aus einer Silikonkomponente und einer zweiten Komponente besteht und eine Tropfzeit von etwa 10 Minuten aufweist und nach etwa 35 Minuten die Vulkanisation bei Raumtemperatur und Umgebungsluftfeuchtigkeit soweit fortgeschritten ist, dass der Klebstoff die notwendige Anfangsfestigkeit erreicht hat und eine Manipulation des Gehäuses (1) nach zwei Stunden, bevorzugt nach einer Stunde und insbesondere bevorzugt nach weniger als 45 Minuten erfolgen kann, ohne dass es zu einem Reißen der Klebenaht kommt.

## Geänderte Patentansprüche

### Geänderte Patentansprüche gemäss Regel 86(2) EPÜ.

**1.** Gehäuse (1) eines Sonnenkollektors, bestehend aus seitlichen Rahmenelementen (2), einer Rückwand (3) und einer Abdeckplatte (4) aus Solarglas oder aus einer Bodenwanne und einer Abdeckplatte (4) aus Solarglas, wobei am Rahmenteil (2) oder an der Bodenwanne ein angeformtes L-Profil (10) vorgesehen ist, das die Abdeckplatte (4) über eine zwischenliegende Klebstoffnaht (12) aufnimmt, **dadurch gekennzeichnet, dass** in der Innenseite einer unteren Auflagefläche des L-förmigen Profils (10) ein Steg (11) nach oben vorspringt, auf dem die Abdeckplatte (4) aufliegt.

**2.** Gehäuse (1) des Sonnenkollektors nach Anspruch 1, **dadurch gekennzeichnet, dass** der Steg (11) einstückig am Profil (10) angeformt ist.

**3.** Gehäuse (1) des Sonnenkollektors nach einem der Ansprüche 1 oder 2, **dadurch gekennzeichnet, dass** der Klebstoff ein Silikonklebstoff, insbesondere ein Zweikomponenten - Silikonklebstoff ist, wobei die Vulkanisation bei Raumtemperatur und der vorherrschenden Luftfeuchtigkeit erfolgt.

**4.** Gehäuse (1) des Sonnenkollektors nach Anspruch 3 **dadurch gekennzeichnet, dass** die einzelnen Gehäuseteile ausschließlich mit diesem Klebstoff verbunden werden.

**5.** Gehäuse (1) des Sonnenkollektors nach einem der Ansprüche 1 bis 4, **dadurch gekennzeichnet, dass** die Überlappung von Abdeckplatte (4) und Rahmen (2) bei Verwendung von Silikonklebstoffen zwischen 5 mm und 12 mm, bevorzugt zwischen 7 mm und 8 mm beträgt.

**6.** Gehäuse (1) des Sonnenkollektors nach einem der Ansprüche 1 bis 5, **dadurch gekennzeichnet, dass** in einem oder mehreren Rahmenteilen (2) mindestens eine Belüftungskerbe (13) eingepresst ist.

**7.** Gehäuse (1) des Sonnenkollektors nach einem der Ansprüche 1 bis 6, **dadurch gekennzeichnet, dass** in mindestens einem Seitenteil (2) eine Flanschplatte (14) zur dichtenden Durchführung eines Sammelrohres (7) vorgesehen ist, welche bevorzugt mindestens eine Belüftungsöffnung (15) aufweist.

**8.** Gehäuse (1) des Sonnenkollektors nach Anspruch 7, **dadurch gekennzeichnet, dass** die Flanschplatte (14) aus dauerelastischem Material gefertigt und einteilig ausgeführt ist, eine radial um die Durchführungsöffnung (21) für das Sammelrohr (7) angeformte Dichtlippe (22), welche bevorzugt als Doppeldichtlippe ausgeführt ist, eine Nut (23) und einen Schlitz (24) besitzt und in die Seitenwand (2) oder in die Bodenwanne eingefügt wird und wobei die Dichtlippen (22) konisch zulaufend ausgebildet sind, wobei in die Nut (23) gegebenenfalls Klebstoff unmittelbar vor ihrer Montage eingebracht wird.

**9.** Gehäuse (1) des Sonnenkollektors nach einem der Ansprüche 1 bis 8, **dadurch gekennzeichnet, dass** der Schnitt (24) mit einer innenliegenden seitlichen Versetzung ausgeführt ist.

**10.** Gehäuse (1) des Sonnenkollektors nach einem der Ansprüche 1 bis 9, **dadurch gekennzeichnet, dass** für den Einsatz bei einer Bodenwanne an die Flanschplatte (14) zusätzlich eine Abdichtlasche (25) angeformt ist.

**11.** Gehäuse (1) des Sonnenkollektors nach einem der Ansprüche 1 bis 10, **dadurch gekennzeichnet, dass** auf einem angeformten Steg (16) des Rahmenteiles (2) eine zusätzliche Halterung (17) für den Absorber aufgesteckt ist.

**12.** Gehäuse (1) des Sonnenkollektors nach einem der Ansprüche 1 bis 11, **dadurch gekennzeichnet, dass** am Rahmenteil (2) ein Schraubkanal (18) angeformt ist.

**13.** Gehäuse (1) des Sonnenkollektors nach einem der Ansprüche 1 bis 12, **dadurch gekennzeichnet, dass** der Rahmenteil (2) oberhalb der Flanschplatte (14) von einem Brückenteil (19) abgeschlossen ist und seitlich im Rahmenteil (2) mindestens eine Hülse (20) zur Durchführung eines Temperaturfühlers vorgesehen ist.
